**Europäisches Patentamt**

(19) **European Patent Office**

**Office européen des brevets**

(11) Veröffentlichungsnummer: **0 256 273 B1**

## EUROPÄISCHE PATENTSCHRIFT

(45) Veröffentlichungstag der Patentschrift:
07.03.90

(21) Anmeldenummer: 87109561.8

(22) Anmeldetag: 03.07.87

(51) Int. Cl.⁴: **B60R 21/02**, B60R 22/46, B62D 1/18

(54) Sicherheitssystem für Kraftfahrzeuge.

(30) Priorität: 14.08.86 DE 3627558

(43) Veröffentlichungstag der Anmeldung:
24.02.88 Patentblatt 88/8

(45) Bekanntmachung des Hinweises auf die Patenterteilung:
07.03.90 Patentblatt 90/10

(84) Benannte Vertragsstaaten:
DE ES FR GB IT SE

(56) Entgegenhaltungen:
WO-A-85/01707

(73) Patentinhaber: AUDI AG,
Auto-Union-Strasse 1 Postfach 220,
D-8070 Ingolstadt(DE)

(72) Erfinder: Adam, Helmut, Dipl.-Ing., Heppstrasse 11,
D-8070 Ingolstadt(DE)
Erfinder: Wilhelm, Werner, Windener Strasse 26,
D-8426 Altmannstein-Pondorf(DE)
Erfinder:
Der weitere Erfinder hat auf seine Nennung verzichtet

(74) Vertreter: Le Vrang, Klaus, AUDI AG
Postfach 220 Patentabteilung I/EQP,
D-8070 Ingolstadt(DE)

ACTORUM AG

## Beschreibung

Die Erfindung betrifft ein Sicherheitssystem für Kraftfahrzeuge gemäß Oberbegriff des Patentanspruches 1.

Ein gattungsgemäßes Sicherheitssystem ist durch die DE-A 3 337 232 bekannt geworden. Dort ist ein Fahrzeug mit einem in seinem Frontbereich angeordneten Antriebsaggregat und einer Vorrichtung zur Nutzung der Aufprallenergie für eine Sicherheitseinrichtung zum Schutz der Fahrzeuginsassen beschrieben, wo unter Ausnutzung einer bei einem Frontalzusammenstoß auftretende Relativbewegung zwischen dem Antriebsaggregat und der Fahrzeugkarosserie die Sicherheitseinrichtung in Wirkstellung gebracht wird. Die Vorrichtung umfaßt dabei ein Seil, welches unter Zwischenschaltung einer Umlenkeinrichtung am Antriebsaggregat und an der Sicherheitseinrichtung befestigt ist. Damit wird die sich bei einem Frontalzusammenstoß bestimmter Größenordnung ergebende Verkleinerung des Abstandes zwischen dem Antriebsaggregat und einem sich nach hinten anschließenden, außerhalb der Knautschzone gelegenen Karosseriebauteil in eine Bewegung der Sicherheitseinrichtung umgesetzt.

Mit dieser Vorgehensweise gehen eine Reihe von Vorteilen einher. Durch die Verwendung des Antriebsaggregates als Auslöseorgan ist sichergestellt, daß die Sicherheitseinrichtung zum Schutz des Fahrzeuginsassen erst dann aktiviert wird, wenn der Frontalzusammenstoß eine entsprechende Größenordnung erreicht. Dies ist eine sinnvolle Maßnahme, da sie einem ungewollten Wirksamwerden der Sicherheitseinrichtung vorbeugt. Die Verwendung eines Seiles zum Übertragen der Kräfte hält den konstruktiven und damit auch kostenmäßigen Aufwand minimal. Ein Seil ist außerdem sehr variabel verlegbar und gewährleistet im Gegensatz zu den bekannten hydraulischen oder pneumatischen Systemen eine wesentlich größere Funktionssicherheit.

Darauf aufbauend liegt der vorliegenden Erfindung die Aufgabe zugrunde, die Einrichtung gemäß DE-A 3 337 232 in der Weise weiterzuentwickeln, daß eine Integration der Einzelkomponenten in ein funktionstüchtiges, sich gegenseitig ergänzendes, kostengünstig verwirklichbares Gesamtsystem erzielt wird. Weiterhin soll das System so ausgelegt sein, daß es die bei einem Frontalzusammenstoß auftretenden kinematischen Verhältnisse (Kräfte, Momente, Beschleunigungen) optimal und soweit als möglich bauteilschonend nutzt.

Diese Aufgabe wird erfindungsgemäß mit einem Sicherheitssystem gelöst, welches durch die Merkmale des Patentanspruches 1 bestimmt ist.

Die wesentlichen Vorteile des erfindungsgemäßen Sicherheitssystems sind darin zu sehen, daß durch den im Bereich des Antriebsaggregates vorgesehenen Seilverbund zunächst eine montagefreundliche Anordnung geschaffen werden konnte. Damit können auch in kostengünstiger Weise gemeinsame Befestigungs-, Führungs- und Leiteinrichtungen verwendet werden. Durch die in etwa symmetrisch zur Fahrzeugmittellinie angeordneten und symmetrisch wirkenden Einrichtungen kann auch eine entsprechend günstige Aufteilung von auftretenden Kräften und Momenten erzielt werden. Durch die Umschlingung des Antriebsaggregates wird in besonders vorteilhafter Weise erreicht, daß trotz einer Reduzierung (Halbierung) der Seilkräfte, die dann aber immer noch in ausreichendem Maße vorhanden sind, eine Verdoppelung des wirksamen Seilweges erreicht werden kann. Dieser große Seilweg kann dann unmittelbar auf die eigentlichen Sicherheitseinrichtungen (Lenksäulenlagerung, Gurtstrammer) übergeleitet werden oder aber durch eventuell zwischengeschaltete weitere Unter- oder Übersetzungsmittel den Anforderungen gemäß modifiziert werden. Dies eröffnet auch entsprechende Möglichkeiten, geeignete Mittel vorzusehen, durch welche die zu übertragende Kraft in definierten Grenzen gehalten werden kann.

Weiter Vorteile ergeben sich aus den Unteransprüchen sowie der nachstehenden Figurenbeschreibung, die eine vorteilhafte Ausführungsform beschreibt. Die zugehörige Zeichnung zeigt dabei in

Fig. 1 eine schematische Darstellung der Wirkungsweise des erfindungsgemäßen Sicherheitssystems und in

Fig. 2 den vorderen Bereich eines Kraftfahrzeuges mit dem integrierten, dem Antriebsaggregat zugeordneten Sicherheitssystem.

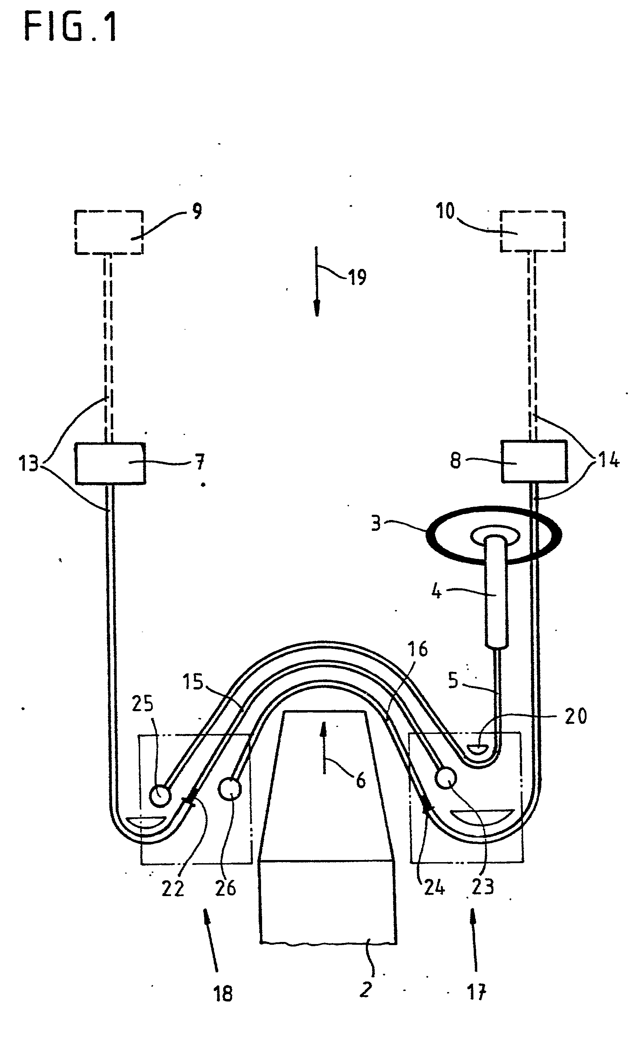

Figur 1 zeigt schematisiert und in einer Draufsicht den vorderen Bereich eines Kraftfahrzeuges (1). Als Teil eines Antriebsaggregates ist ein Getriebe (2) gezeigt. An einem Lenkrad (3) bzw. an einer Lenksäule (4) greift ein Seil (5) an, welches, wie im Stande der Technik bekannt bei einem Frontalzusammenstoß in Zusammenhang mit einer entsprechenden Verschiebung (Pfeil 6) des Getriebes (2) das Lenkrad (3) aus dem Gefahrenbereich für den Fahrzeugführer bringen soll.

Weiterhin sind in Figur 1 die Aufwickelvorrichtungen (7, 8) für die den Sitzen des Fahrzeugführers und des Beifahrers zugeordneten Sicherheitsgurte gezeigt. Zusätzlich sind gestrichelt angedeutet die entsprechenden Aufwickelvorrichtungen (9, 10) für die im Fondbereich des Kraftfahrzeuges vorgesehenen Sicherheitsgurte. An zumindest den vorderen Aufwickelvorrichtungen (7, 8), alternativ aber auch zusätzlich an den hinteren Aufwickelvorrichtungen (9, 10) greift jeweils ein Bowdenzug (13, 15 bzw. 14, 16) mit dessen Seil (15, 16) an. An links- und rechtsseitig nahe dem vorderen Bereich des Getriebes (2) angeordneten Führungs- und Befestigungseinheiten (17, 18), die stationär an auch bei einem Frontalzusammenstoß unverrückbaren Karosserieelementen befestigt sind, werden die vorbeschriebenen Seile (5, 15, 16) geführt, umgelenkt bzw befestigt.

So umfaßt die in Fahrtrichtung (Pfeil 19) linksseitig des Getriebes (2) angeordnete Führungs- und Befestigungseinheit (17) eine Umlenk- bzw. Leitschiene (20) für das an der Lenksäule (4) angreifende Seil (5), eine Verankerung (23) für das abschnittsweise im rechten Bowdenzugmantel (13) geführte Seil (15) und schließlich ein Bowdenzug-Endstück (24), an dem das im linken Bowdenzugmantel (14) abschnittsweise geführte Seil (16) aus diesem heraustritt. Die in Fahrtrichtung (Pfeil 19) gesehen auf der rechten Seite des Getriebes (2) angeordnete Führungs- und Befestigungseinheit (18) beinhaltet Verankerungen (25, 26) für die bereits vorgenannten Seile (5, 16) sowie die Halterung für ein weiteres Bowdenzug-Endstück (22), an dem das abschnittsweise im rechten Bowdenzugmantel (13) geführte Seil (15) aus diesem heraustritt.

Sämtliche Seile (5, 15, 16) sind somit im Bereich des Getriebes (2) zu einem Seilverbund zusammengefaßt und um das Getriebe herumgeführt.

Da insbesondere während der Fahrt, aber auch allein schon bei laufendem Motor über Verbund mit dem Antriebsmotor gewisse Bewegungen, Erschütterungen oder Vibrationen im Bereich des Getriebes (2) stattfinden, sind die Seile (5, 15, 16) relativ lose um dieses herumgelegt. Dies deshalb, da bei solchen relativ geringen Getriebebewegungen, die sich gegebenenfalls auch bei einem minder schweren Aufprall des Kraftfahrzeuges einstellen können, keine Seilkräfte auf die Lenksäule (4) bzw. auf die Aufwickelvorrichtungen (7 - 10) der Sicherheitsgurte einwirken sollen. Durch das Herumlegen der Endbereiche der Seile (5, 15, 16) um das Getriebe (2) wird erreicht, daß bei einer unfallbedingten Verschiebung desselben um einen bestimmten Weg die Seile (5, 15, 16) den doppelten Weg zurücklegen. Somit ist die Funktionssicherheit des Gesamtsystems auch dann gewährleistet, wenn, wie vorbeschrieben, die Seile (5, 15, 16) nur relativ lose, das heißt mit ausreichendem Spiel um das Getriebe (2) herumgelegt sind.

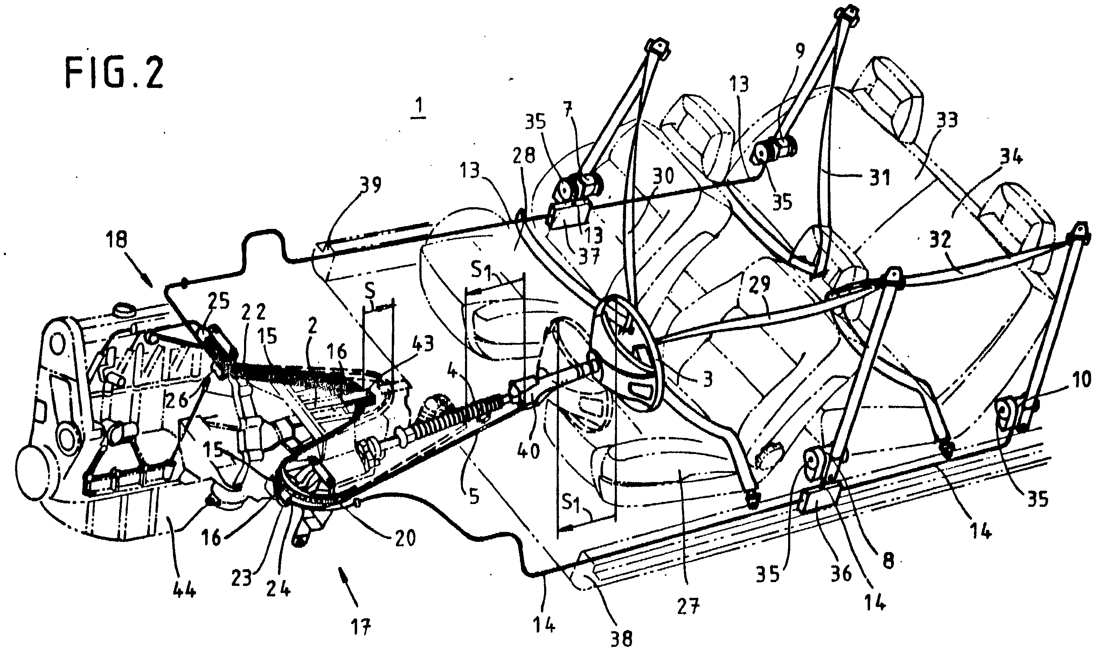

Figur 2 verdeutlicht den konstruktiven Aufbau des gesamten Sicherheitssystems. Für einen Fahrersitz (27) sowie einen Beifahrersitz (28) ist jeweils ein Dreipunkt-Sicherheitsgurt (29, 30) vorgesehen. Gleiches gilt für die Sitze (33, 34) im Fondbereich. Jedem Sicherheitsgurt (29 - 32) ist eine Aufwickelvorrichtung (7 - 10) zugeordnet. Zur Unterstützung der Funktion der Sicherheitsgurte (29 - 32) ist nun vorgesehen, diese beim Aufprall des Kraftfahrzeuges (1) auf ein Hindernis zusätzlich zu strammen. Diese Maßnahme kann alternativ lediglich für die vorderen Sicherheitsgurte (29, 30) oder aber, wie im gezeigten Ausführungsbeispiel, für sämtliche Sicherheitsgurte (29 - 32) vorgesehen werden. Zu diesem Zweck ist nun beispielsweise jede Aufwickelvorrichtung (7 - 10) mit einer Seilscheibe (35) versehen. Darauf sind jeweils die von den Bowdenzugmänteln (13, 14) umschlossenen Seile (15, 16) teilweise aufgewickelt. Sowohl auf der linken als auch auf der rechten Seite ist hierzu jeweils eine Seilverzweigung (36, 37) vorgesehen, so daß nach vorne in den Bereich des Motorraumes jeweils nur noch ein Bowdenzug (13, 15 bzw. 14, 16) vorzugsweise im Bodenschweller (38, 39) der Fahrzeugkarosserie zu verlegen ist.

An einer Halterung bzw. Lagerung (40) der als zumindest abschnittsweise als Wellrohr ausgeführten Lenksäule (4) für das Lenkrad (3) ist das bereits vorbeschriebene Seil (5) befestigt. Dieses führt, wie auch die genannten Bowdenzüge (13, 15 bzw. 14, 16) zu den Führungs- und Befestigungseinheiten (17, 18) mit den darin integrierten Verankerungen (23, 25, 26), Endstücken (22, 24) und der Leitschiene (20). Die Führungs- und Befestigungseinheiten (17, 18) sind als Halteböcke ausgeführt und vorzugsweise mittels Schraubverbindungen (nicht dargestellt) an beispielsweise den Längsträgern der Fahrzeug-Rahmenkonstruktion befestigt. Das Lenkrad-Seil (5) sowie die aus den Bowdenzügen (13, 15 bzw. 14, 16) heraustretenden Seile (15, 16) sind, wie bereits erwähnt dann zu einem Seilverbund zusammengefaßt und relativ lose um das Getriebe (2) herumgeführt. Im hinteren Bereich desselben sind sie mittels einer daran befestigten Halteklammer (43) zusätzlich gehalten und geführt, so daß sie nicht aus der für die Funktion des gesamten Sicherheitssystems bedeutsamen Gebrauchslage gelangen können. Dem Getriebe (2) vorgelegt ist ein damit mechanisch gekoppelter, längs eingebauter Motorblock (44), die zusammen die Antriebseinheit bilden.

Wird diese nun durch einen Frontalzusammenstoß um den Weg (s) nach hinten verschoben, so folgen die Seile (5, 15, 16) dieser Bewegung und nehmen die gestrichelt dargestellte Position ein. Aufgrund der jeweiligen zweifachen Seilumlenkung hat sich das Lenkrad (3) um den zweifachen Weg (s1) vom Fahrzeugführer wegbewegt und nimmt dann ebenfalls die gestrichelt gezeigte Position ein. Dabei hat sich das Wellrohr der Lenksäule (4) entsprechend deformiert. Gleichzeitig haben die auf die Seilscheiben (35) einwirkenden Seile (15, 16) die Sicherheitsgurte (29 - 32) gestrammt, so daß die damit zu sichernde Person nur noch relativ wenig nach vorne geschleudert werden kann.

Mit diesem Sicherheitssystem ist für die Fahrzeuginsassen ein Optimum an Sicherheit bei minimalem kostenmäßigen und konstruktiven Aufwand gewährleistet. Aufgrund der rein mechanischen Kopplung mittels Seilen ist die Störanfälligkeit auf ein Minimum gesunken. Die Erweiterbarkeit, d. h. Einbeziehung weiterer Sicherheitseinrichtungen (z. B. Anheben der Sitzvorderkante) ist ohne weiteres möglich.

## Patentansprüche

1. Sicherheitssystem für Kraftfahrzeuge zum Schutz der Insassen bei einem Frontalaufprall, wobei Sicherheitseinrichtungen vorgesehen sind, die jeweils einen mittels Seilkräften arbeitenden Mechanismus umfassen, welcher die bei einem Frontalaufprall sich ergebende relative Verschiebung eines im Frontbereich des Kraftfahrzeuges angeordneten Antriebsaggregates gegenüber anderen Karosseriebauteilen nutzt und diese unter Zwischenschaltung einer Seil-Umlenkeinrichtung in eine Bewegung der Sicherheitseinrichtung umsetzt, um sie in ihre Wirkstellung zu bringen, dadurch gekennzeichnet, daß in Fahrtrichtung (19) gesehen zu beiden Seiten des Antriebsaggregates (2) jeweils eine Führungs- und Befestigungseinheit (17, 18) zur Verankerung und Umlenkung einer zu einem Seilverbund zusammengefaßten und in diesem Bereich etwa parallel zueinander verlaufenden Anzahl von Seilen (5, 15, 16) vorgesehen ist, welche Seile (5, 15, 16) jeweils mit einer Sicherheitseinrichtung (4, 29-32) gekoppelt sind, das Antriebsaggregat (2) zumindest teilweise umschlingen und im hinteren Bereich desselben mittels weiterer Führungsmittel (43) in ihrer Gebrauchslage gehalten und geführt werden.

2. Sicherheitssystem nach Patentanspruch 1, dadurch gekennzeichnet, daß ein aus mindestens drei Seilen (5, 15, 16) bestehender Seilverbund vorgesehen ist, wobei ein Seil (5) an der Lenksäule (4) eines Lenkrades (3) des Kraftfahrzeuges (1) angreift und zwei weitere Seile (15, 16) mit Aufwickelvorrichtungen (7 - 10) den Fahrzeugsitzen (27, 28, 33, 34) zugeordneter Sicherheitsgurte (29 - 32) gekoppelt sind.

3. Sicherheitssystem nach Patentanspruch 2, dadurch gekennzeichnet, daß die die Sicherheitsgurte strammenden Seile (15, 16) mit den Dreipunkt-Sicherheitssystemen (29, 30) für den Fahrersitz (27) sowie den Beifahrersitz (28) gekoppelt sind.

4. Sicherheitssystem nach Patentanspruch 2, dadurch gekennzeichnet, daß sämtliche im Kraftfahrzeug (1) vorgesehenen Sicherheitsgurtsysteme (29 - 32) mit den Seilen (15, 16) gekoppelt sind, wofür beidseitig jeweils eine Seilverzweigung (36, 37) vorgesehen ist.

5. Sicherheitssystem nach Patentanspruch 2, dadurch gekennzeichnet, daß eine Einrichtung zum unfallbedingten Anheben einer oder mehrer Fahrzeugsitz-Vorderkanten in den Seilverbund einbeziehbar ist.

6. Sicherheitssystem nach Patentanspruch 2, dadurch gekennzeichnet, daß die Seilverbindungen zu den Sicherheitseinrichtungen (3, 4, 29 - 32) als Bowdenzüge (13, 15 bzw. 14, 16) ausgestaltet sind und zu den Führungs- und Befestigungseinheiten (17, 18) führen, wobei die in Fahrtrichtung (19) linksseitig des Getriebes (2) angeordnete Führungs- und Befestigungseinheit (17) eine Leitschiene (20) für das an der Lenksäule (4) angreifende Seil (5), eine Verankerung (23) für das abschnittsweise im rechten Bowdenzugmantel (13) geführte Seil (15) und schließlich ein Bowdenzug-Endstück (24) umfaßt, an dem das im linken Bowdenzug (14) abschnittsweise geführte Seil (16) aus diesem heraustritt, während die in Fahrtrichtung (19) gesehen auf der rechten Seite des Getriebes (2) angeordnete Führungs- und Befestigungseinheit (18) Verankerungen (25, 26) für die Seile (5, 16) sowie ein weiteres Bowdenzug-Endstück (22) beinhaltet, an dem das abschnittsweise im rechten Bowdenzugmantel (13) geführte Seil (15) aus diesem heraustritt.

7. Sicherheitssystem nach Patentanspruch 6, dadurch gekennzeichnet, daß die Bowdenzüge (13, 15 bzw. 14, 16) beidseitig entlang der Bodenschweller (38, 39) der Fahrzeugkarosserie verlegt sind.

8. Sicherheitssystem nach Patentanspruch 6, dadurch gekennzeichnet, daß jeder Sicherheitsgurt-Aufwickelvorrichtung (7 - 10) eine Seilscheibe (35) zugeordnet und damit verdrehfest verbunden ist, auf die das Seil (15, 16) eines Bowdenzuges (13, 15 bzw. 14, 16) aufgewickelt ist, während das die Verschiebung des Lenkrades (3) einleitende Seil (5) an einer Lagerung (40) der abschnittsweise als Wellrohr ausgeführten Lenksäule (4) befestigt ist.

## Revendications

1. Système de sécurité pour véhicules automobiles destiné à la protection des passagers lors d'un impact frontal, dans lequel sont prévus des dispositifs de sécurité, qui comprennent respectivement un mécanisme opérant au moyen de forces transmises par un câble, lequel mécanisme utilise, lors d'un choc frontal, le déplacement qui en résulte d'un groupe de propulsion disposé dans la région avant d'un véhicule par rapport à d'autres éléments de carrosserie et transforme celui-ci, grâce à l'interposition d'un dispositif de renvoi de câbles, en un déplacement du dispositif de sécurité afin d'amener celui-ci en position active, caractérisé en ce qu'il est respectivement prévu des deux côtés du groupe de propulsion (2), en regardant dans le sens de la marche, une unité de guidage et de fixation (17, 18) destinée à l'ancrage et au renvoi d'un certain nombre de câbles (5, 15, 16) réunis en un faisceau de câbles et s'étendant de manière sensiblement parallèle entre eux dans cette région, lesquels câbles (5, 15, 16) sont individuellement couplés à un dispositif de sécurité (4, 29–32), entourent au moins en partie le groupe de propulsion (2) et sont maintenus et guidés dans leur position d'utilisation à l'aide d'autres moyens de guidage (43) dans la partie arrière du groupe de propulsion.

2. Système de sécurité selon la revendication 1, caractérisé en ce qu'il est prévu un faisceau de câbles comprenant au moins trois câbles (5, 15, 16), dont un câble (5) agit sur la colonne de direction d'un volant (3) du véhicule et dont les deux autres câbles (15, 16) sont couplés à des dispositifs enrouleurs (7–10) de ceintures de sécurité (29–32) affectées aux sièges du véhicule (27, 28, 33, 34).

3. Système de sécurité selon la revendication 2, caractérisé en ce que les câbles (15, 16), qui tendent les ceintures de sécurité, sont couplés aux systèmes de sécurité à trois points (29, 30) du siège du conducteur et du siège du passager avant.

4. Système de sécurité selon la revendication 2, caractérisé en ce que tous les systèmes de ceintures de sécurité (29–32) prévus dans le véhicule (1) sont couplés aux câbles (15, 16), ce pourquoi il est prévu, de chaque côté, une ramification (36, 37) des câbles.

5. Système de sécurité selon la revendication 2, caractérisé en ce qu'un dispositif pour le soulèvement, en cas d'accident, d'un ou de plusieurs bords avant de siège du véhicule peut être intégré dans le faisceau de câbles.

6. Système de sécurité selon la revendication 2, caractérisé en ce que les raccordements par câbles aux dispositifs de sécurité (3, 4, 29–32) sont réalisés sous forme de transmissions Bowden (13, 15 et 14, 16) et aboutissent aux unités de guidage et de fixation (17, 18), en ce que l'unité de guidage et de fixation (17) disposée du côté gauche de la boîte de vitesses (2) suivant la direction de marche (19) comprend un rail de guidage (20) du câble (5) agissant sur la colonne de direction (4), un ancrage (23) pour le câble (15) qui est en partie guidé dans la gaine de la transmission Bowden droite (13), et enfin un élément d'extrémité (24) de la transmission Bowden, au niveau duquel le câble (16) qui est en partie guidé dans la gaine de la transmission Bowden gauche (14), sort de celle-ci tandis que l'unité de guidage et de fixation (18) disposée sur le côté droit de la boîte de vitesses (2), en regardant dans le sens de la marche, comporte des ancrages (25, 26) pour les câbles (5, 16) ainsi qu'un autre élément d'extrémité de transmission Bowden (22), au niveau duquel le câble (15) qui est, en partie guidé dans la gaine de la transmission Bowden droite (13) sort de celle-ci.

7. Système de sécurité selon la revendication 6, caractérisé en ce que les transmissions Bowden (13, 15 et 14, 16) sont posées, des deux côtés, le long du seuil de plancher (38, 39) de la carrosserie du véhicule.

8. Système de sécurité selon la revendication 6, caractérisé en ce qu'à chaque dispositif enrouleur de ceinture de sécurité (7–10) est associée et calée en rotation une poulie (35) à câble, sur laquelle est enroulé le câble (15, 16) d'une transmission Bowden (13, 15 et 14, 16), tandis que le câble (5) qui provoque le déplacement du volant (3) est fixé à une monture (40) de la colonne de direction (4) réalisée en partie sous forme de tube ondulé.

**Claims**

1. Safety system for motor vehicles for protecting the occupants in the event of a head-on collision, safety means being provided comprising in each case a mechanism which operates by means of cable forces and which uses the relative displacement, occurring in the event of frontal impact, of a drive unit arranged in the front region of the motor vehicle relatively to other vehicle body components, and converts same, through the agency of a cable guide or deflection arrangement, into a movement of the safety system to bring it into its effective position, characterised in that guiding and securing units 17, 18 are provided one at each of the two sides of the drive unit 2 as viewed in the direction of travel 19, for anchoring and guiding or deflecting a plurality of cables 5, 15, 16 which are brought together to form a cable system and in this region extend approximately parallel to one another, the said cables 5, 15, 16 being coupled in each case to a safety means 4, 29–32 and looping at least partly around the drive unit 2 and being held in their position of use and guided in the rear region of said unit by means of further guide means 43.

2. Safety system according to claim 1, characterised in that a cable system is provided comprising at least three cables 5, 15, 16, one cable 5 being attached to the steering column 4 of a steering wheel 3 of the motor vehicle 1, and two further cables 15, 16 being coupled to winding devices 7–10 of safety belts 29–32 associated with the vehicle seats 27, 28, 33, 34.

3. Safety system according to claim 3, characterised in that the cables 15, 16 tightening the safety belts are coupled to the three-point safety systems 29, 30 for the driver's seat 27 and the front passenger's seat 28.

4. Safety system according to claim 2, characterised in that all the safety belt systems 29–32 provided in the motor vehicle 1 are coupled to the cables 15, 16, a cable branch device 36, 37 being provided at each of the two sides.

5. Safety system according to claim 2, characterised in that a means for lifting one or more vehicle seat front edges in the event of accident is adapted to be incorporated in the cable system.

6. Safety system according to claim 2, characterised in that the cable connections to the safety means 3, 4, 29–32 are arranged as Bowden cables 13, 15 and 14, 16 respectively and lead to the guiding and securing units 17, 18, and the guiding and securing unit 17 situated at the left-hand side of the transmission 2 as viewed the direction of travel 19 comprises a guide rail 20 for the cable 5 attached to the steering column 4, an anchoring point 23 for the wire 15 guided partly in the right-hand Bowden cable sheath 13, and finally a Bowden cable end piece 24 whereat the wire 16 guided partly in the left-hand Bowden cable 14 issues from the said cable, whereas the guiding and securing unit 18 situated at the right-hand side of the transmission 2 as viewed in the direction of travel 19 comprises anchoring points 25, 26 for the cables 5, 16 and also a further Bowden cable end piece 22 whereat the cable 15 guided partly in the right-hand Bowden cable sheath 13 issues therefrom.

7. Safety system according to claim 6, characterised in that the Bowden cables 13, 15 and 14, 16 respectively are laid at the two sides along the floor beams 38, 39 of the vehicle body.

8. Safety system according to claim 6, characterised in that a cable pulley 35 is associated with and connected to be integral in rotational movement with each safety belt winding device 7–10, the wire 15, 16 of a Bowden cable 13, 15 and 14, 16 respectively being wound on to the said pulley, whereas the cable 5 initiating the displacement of the steering wheel 3 is secured to a support 40 of the steering column 4, the said steering column being constructed partly as a corrugated tube.

# FIG.1

FIG.2